# EUROPÄISCHE PATENTSCHRIFT

(11) **EP 2 597 752 B1**
(45) Veröffentlichungstag und Bekanntmachung des Hinweises auf die Patenterteilung: **21.04.2021**
(21) Anmeldenummer: 12007889.4
(22) Anmeldetag: 23.11.2012
(51) Int. Cl.: H02K 1/22, B22D 19/00, H02K 15/00, H02K 1/17, H02K 21/46, H02K 1/27

(54) **Lamellenstapel für Rotoren und/oder Statoren von Elektromotoren und Generatoren, Rotor mit einem solchen Lamellenstapel**
Stacked lamination for rotors and/or stators of electric motors and generators, rotor with such a stacked lamination
Empilement de tôles pour rotors et/ou stators de moteurs et générateurs électriques, rotor avec un tel empilement de tôles

(30) Priorität: 28.11.2011 DE 102011119922
(43) Veröffentlichungstag der Anmeldung: 29.05.2013
(73) Patentinhaber: Kienle + Spiess GmbH, 74343 Sachsenheim (DE)
(72) Erfinder: Braun, Michael Dr., 88400 Biberach (DE); Bauer, Steffen, 74374 Zaberfeld (DE); Blocher, Daniel, 86932 Pürgen (DE); Bárdos, András Dr., 42579 Heiligenhaus (DE)
(74) Vertreter: Kohl, Karl-Heinz

(56) Entgegenhaltungen:
- DE-A1- 10 227 859
- DE-C- 886 337
- JP-A- H05 122 877
- JP-A- S57 186 966
- JP-A- S61 102 155
- JP-A- S61 102 157

## Beschreibung

Die Erfindung betrifft einen aus Blechlamellen gebildeten Lamellenstapel für Rotoren und/oder Statoren von Elektromotoren und Generatoren nach dem Oberbegriff des Anspruches 1 sowie einen Rotor nach Anspruch 4.

Lamellenstapel werden für Rotoren und Statoren von Elektromotoren eingesetzt. Der Lamellenstapel besteht aus aufeinandergesetzten und miteinander verbundenen Blechlamellen. Wird der Lamellenstapel für Rotoren von Synchronmotoren eingesetzt, dann hat der Rotor als Anlaufhilfe einen Anlaufkäfig.

Es ist ein aus Blechlamellen gebildeter Lamellenstapel bekannt (DE 102 27 859 A1, JP S57 186 966 A), der mit einem Anlaufkäfig sowie mit rechtwinklig zueinander liegenden Taschen zur Aufnahme von Magneten versehen ist. Zwischen den Taschen befinden sich axial verlaufende, im Umriss dreieckförmige Hohlräume, die kleineren radialen Abstand vom Anlaufkäfig haben als die Taschen.

Es ist ein weiteres, aus aufeinander sitzenden Blechlamellen gebildetes Lamellenpaket bekannt (JP 5-122877 A), das einen Anlaufkäfig, Taschen für Magnete und Hohlräume aufweist. Die Taschen sind in Axialansicht viertelkreisförmig ausgebildet. Die Hohlräume erstrecken sich radial zwischen benachbarten Taschen bis nahe zum äußeren Rand des Lamellenpaketes. Auf die Stirnseiten des Lamellenpaketes werden Endplatten aufgesetzt, welche die Hohlräume verschließen.

Es ist weiter bekannt (JP S61 102155 A), axial verlaufende Hohlräume eines Lamellenpaketes während des Druckgießvorganges mittels eines kegelförmigen Stiftes zu verschließen, der Bestandteil der Druckgussform ist.

Es ist auch bekannt (DE 886 337 C), bei der Herstellung von Kurzschlusskäfigläufern die axial verlaufenden Hohlräume im Lamellenpaket während des Spritzgießverfahrens durch Blechscheiben zu verschließen.

Der Erfindung liegt die Aufgabe zugrunde, den gattungsgemäßen Lamellenstapel und den Rotor so auszubilden, dass sie kostengünstig und zuverlässig hergestellt werden können.

Diese Aufgabe wird beim gattungsgemäßen Lamellenstapel erfindungsgemäß mit den kennzeichnenden Merkmalen des Anspruches 1 und beim Rotor mit den Merkmalen des Anspruches 4 gelöst.

Beim erfindungsgemäßen Lamellenstapel sind zwischen benachbarten Taschen zur Aufnahme der Magnete axial verlaufende Hohlräume vorgesehen. Die Hohlräume reduzieren den Streufluss der Magnete wesentlich. Die Hohlräume sind im Lamellenstapel an beiden Enden geschlossen, wenn der Anlaufkäfig im Druckgießverfahren hergestellt wird. Die Hohlräume werden darum beim Druckgießverfahren nicht mit dem Druckgießmaterial gefüllt, obwohl sie nur geringen Abstand vom Anlaufkäfig haben. Der Abstand zwischen den Taschen und dem herzustellenden Anlaufkäfig ist wegen der geschlossenen Hohlräume so groß, dass beim Druckgießvorgang der Druck so weit abgebaut werden kann, dass das Druckgießmaterial nicht in die Taschen gelangt. Es ist dadurch möglich, erst nach dem Druckgießvorgang die Magnete in die Taschen des Lamellenstapels einzusetzen. Die Hohlräume haben kleineren radialen Abstand vom Anlaufkäfig als die Taschen für die Magnete.

Die Hohlräume sind an beiden Enden durch jeweils wenigstens eine Blechlamelle geschlossen. Sie bildet jeweils eine endseitige Blechlamelle des Lamellenstapels.

Die endseitigen Blechlamellen können aus magnetischem oder nichtmagnetischem Material bestehen.

Als Druckgießmaterial wird vorteilhaft Aluminium, Aluminiumlegierungen, Kupfer, Kupferlegierungen und Materialien mit einem Leitwert ≥ 58 MS/m verwendet.

Der erfindungsgemäße Rotor ist dadurch gekennzeichnet, dass er einen Lamellenstapel aufweist, bei dem zwischen benachbarten Taschen axial verlaufende Hohlräume vorhanden sind, die an beiden Enden geschlossen sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: im Axialschnitt einen erfindungsgemäßen Lamellenstapel, der Teil eines Rotors eines Elektromotors in Form eines Innenläufers ist,
- Fig. 2: eine Stirnansicht des Lamellenstapels gemäß Fig. 1 ohne endseitige Blechlamellen,
- Fig. 3: den erfindungsgemäßen Lamellenstapel gemäß Fig. 2 in Verbindung mit einem als Stator dienenden weiteren Lamellenstapel in Axialansicht,
- Fig. 4: eine Stirnansicht des Lamellenstapels gemäß Fig. 1,
- Fig. 5: in einer Darstellung entsprechend Fig. 4 den Lamellenstapel ohne endseitige Blechlamellen,
- Fig. 6: eine Stirnansicht einer weiteren Ausführungsform eines erfindungsgemäßen Lamellenstapels, der Teile eines Rotors eines Elektromotors in Form eines Außenläufers ist,
- Fig. 7: eine Stirnansicht des Lamellenstapels gemäß Fig. 6 mit endseitigen Blechlamellen,
- Fig. 8: einen für einen Linearmotor vorgesehenen Lamellenstapel ohne endseitige Blechlamellen der nicht zur Erfindung gehört,
- Fig. 9: den Lamellenstapel gemäß Fig. 8 mit endseitigen Blechlamellen.

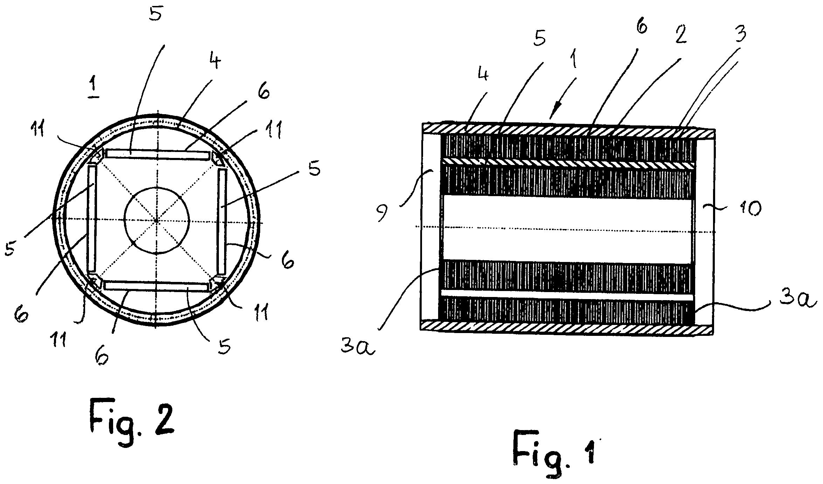

Fig. 1 zeigt einen Rotor 1, der einen Lamellenstapel 2 aufweist. Er besteht aus einzelnen, aufeinandergesetzten Blechlamellen 3, die in bekannter Weise miteinander verbunden sind.

Der Lamellenstapel 2 wird von einem Anlaufkäfig 4 umgeben, der im Druckgießverfahren hergestellt wird. Der Anlaufkäfig 4 überragt den Lamellenstapel 2 axial an beiden Enden. Der Anlaufkäfig 4 ist am Umfang des Lamellenstapels 2 angeordnet, der einen zylindrischen Außenmantel aufweist.

Im Lamellenstapel 2 sind Magnete 5 untergebracht, die sich in Taschen 6 des Lamellenstapels 2 befinden. Im Ausführungsbeispiel hat der Lamellenstapel 2 vier rechtwinklig zueinander liegende Taschen 6 für die Magnete 5. Je nach Ausbildung des Rotors 1 kann der Lamellenstapel 2 auch eine andere Zahl von Taschen 6 und damit von Magneten 5 haben, wobei die Taschen dann unter anderen Winkeln zueinander liegen können. Die Taschen 6 haben jeweils rechteckigen Umriss und sind gleich ausgebildet. Sämtliche Taschen 6 enden jeweils mit geringem Abstand vom Anlaufkäfig 4 bzw. der Mantelfläche des Lamellenstapels 2.

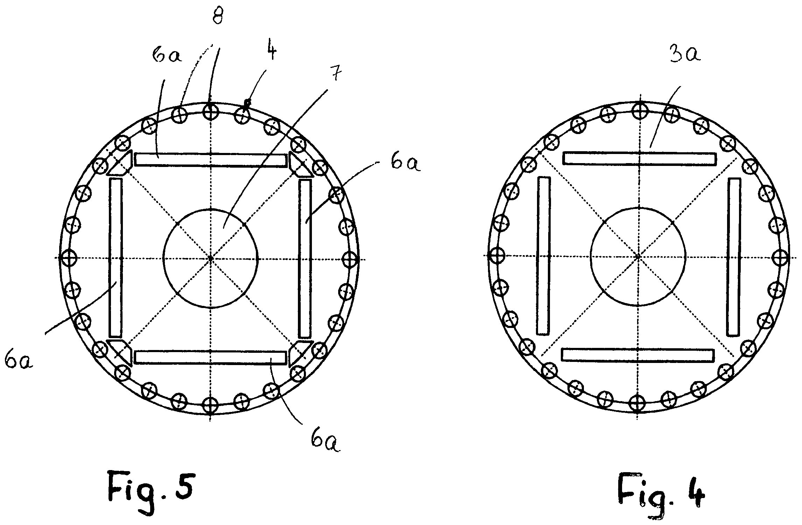

Die einzelnen Blechlamellen 3 weisen Öffnungen 6a auf (Fig. 5), die die Taschen 6 des Lamellenstapels 2 zur Aufnahme der Magnete 5 bilden. Jede Blechlamelle 3 hat eine zentrische kreisringförmige Öffnung 7. Die Öffnungen 7 bilden im Lamellenstapel 2 eine zylindrische Aufnahme für eine (nicht dargestellte) Rotorwelle, auf welcher der Lamellenstapel 2 drehfest sitzt.

Der Anlaufkäfig 4 hat axial verlaufende Dämpferstäbe 8, die längs des Umfangs des Rotors 1 mit Abstand gleichmäßig verteilt angeordnet sind. Nach dem Druckgießvorgang befinden sich an beiden Enden des Lamellenstapels 2 (nicht dargestellte) Kurzschlussringe, die sich jeweils in einem Aufnahmeraum 9, 10 befinden (Fig. 1).

Damit die in den Taschen 6 befindlichen Magnete 5 keinen großen Streufluss erzeugen, befinden sich im Bereich zwischen den Taschen 6 Hohlräume 11, die den Streufluss wesentlich reduzieren. Die Hohlräume 11 haben etwa trapezförmigen Umriss mit einer Längsseite 12, die vorteilhaft parallel zur Innenseite des Anlaufkäfigs 4 verläuft. Die gegenüberliegende kürzere Längsseite 13 des Hohlraumes 11 liegt auf einer gedachten, die inneren Ecken der rechtwinklig zueinander liegenden benachbarten Taschen 6 verbindenden Ebene. Die Enden der beiden Längsseiten 12, 13 sind durch Schmalseiten 14, 15 miteinander verbunden, die jeweils parallel zu den Schmalseiten der jeweils benachbarten Tasche 6 verlaufen. Die längere Längsseite 12 der Hohlräume 11 hat geringeren Radialabstand vom Anlaufkäfig 4 als die radial äußeren Ecken der Taschen 6. Der Abstand der Hohlräume 11 von den Schmalseiten der benachbarten Taschen 6 ist wesentlich kleiner als der Radialabstand, den die Hohlräume 11 bzw. die Längsseiten 12 vom Anlaufkäfig 4 haben. Jede Blechlamelle 3 hat Öffnungen 11, die im Lamellenstapel 2 die axialen Hohlräume 11 bilden, die vorteilhaft gleich ausgebildet sind.

Der Anlaufkäfig 4 wird im Druckgießverfahren kostengünstig hergestellt. Hierbei ist es vorteilhaft, wenn die Magnete 5 erst nach dem Druckgießvorgang in die Taschen 6 geschoben werden. Da beim Druckgießen ein hoher Druck angewendet wird, ist ein Abstand zwischen dem Anlaufkäfig 4 und den Taschen 6 von einigen Millimetern erforderlich. Die Hohlräume 11 würden beim Druckgießen mit dem Druckgießmaterial gefüllt. Wegen des geringen Abstandes zu den Taschen 6 könnte der Druck beim Druckgießvorgang wegen des geringen Abstandes zwischen den Hohlräumen 11 und den Taschen 6 nicht abgebaut werden. Dies hätte zur Folge, dass auch die Taschen 6 mit dem Druckgießmaterial gefüllt würden.

Um den Anlaufkäfig 4 vorteilhafterweise im Druckgießverfahren herzustellen und andererseits den Streufluss der Magnete 5 durch Anbringen der Hohlräume 11 zu reduzieren, ist der Lamellenstapel 2 so ausgebildet, dass die Hohlräume 11 endseitig durch jeweils wenigstens eine Blechlamelle 3a abgedeckt werden. Diese Blechlamelle 3a (Fig. 4) unterscheidet sich von allen anderen Blechlamellen 3 des Lamellenstapels 2 dadurch, dass sie keine Fenster aufweist. Wenn darum auf die beiden Stirnseiten des Lamellenstapels 2 jeweils eine solche Blechlamelle 3a aufgesetzt wird, sind die Hohlräume 11 geschlossen, so dass der Anlaufkäfig 4 problemlos im Druckgießverfahren hergestellt werden kann. Die endseitigen Blechlamellen 3a dienen als Deckel, die den Zutritt des Druckgießmaterials in die Hohlräume 11 verhindern. Der Abstand zwischen dem Anlaufkäfig 4 und den Taschen 6 ist wegen der abgedeckten Hohlräume 11 nunmehr so groß, dass der Druck beim Druckgießvorgang so weit abgebaut werden kann, dass das Druckgießmaterial nicht in die Taschen 6 gelangt.

Die beiden endseitigen Blechlamellen 3a können aus einem magnetischen oder einem nichtmagnetischen Werkstoff bestehen. Es ist ohne Weiteres möglich, an den beiden Enden des Lamellenstapels 2 jeweils auch mehr als nur eine Blechlamelle 3a vorzusehen.

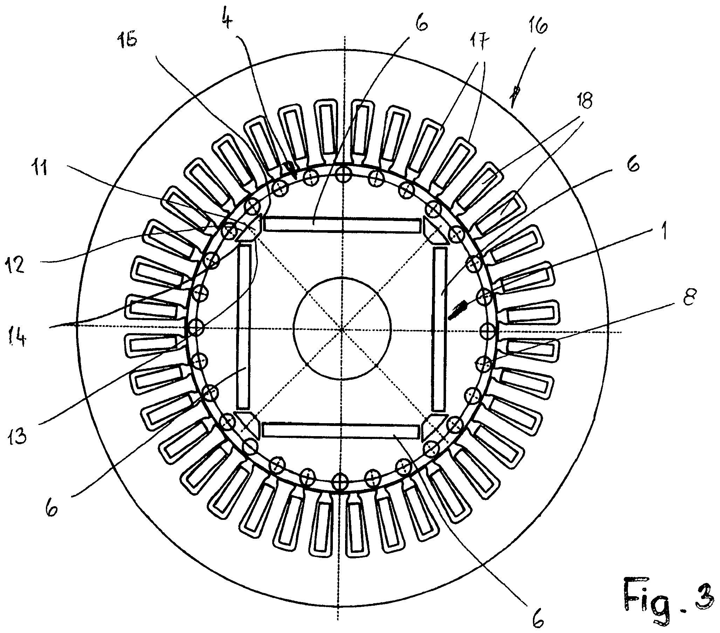

Die unterschiedlichen Blechlamellen 3 und 3a lassen sich sehr einfach aus einem Blechband stanzen. Das Stapeln der unterschiedlichen Blechlamellen 3 und 3a zum Lamellenstapel 2 erfolgt in bekannter Weise automatisch. Wie Fig. 3 zeigt, ist der Rotor 1 von einem Stator 16 umgeben. Er besteht ebenfalls aus gestapelten Blechlamellen, die am inneren Rand mit Nuten 17 zur Aufnahme der Wicklung 18 versehen sind. Diese Ausbildung ist Teil eines permanentmagneterregten Synchronmotors mit den eingebetteten Magneten 5 und dem Anlaufkäfig 4. Ein solcher Synchronmotor ist für ein direktes Einschalten ins Netz geeignet. Er ist in der Lage, ohne Einsatz eines Umrichters selbstständig zu beschleunigen und zu synchronisieren. Nach dem asynchronen Hochlauf läuft der Synchronmotor synchron am Netz und hat einen hohen Wirkungsgrad. Der asynchrone Anlauf hat den Vorteil, dass ein Umrichter nicht erforderlich ist. Die Anordnung gemäß Fig. 3 ist Teil eines Innenläufer-Synchronmotors.

Die Form der Fenster 11 hängt von der Lage der Taschen 6 relativ zueinander innerhalb des Lamellenstapels und der Form der Taschen 6 ab. Da bei der beschriebenen Ausführungsform die Taschen 6 rechtwinklig zueinander liegen und die Fenster 11 zwischen benachbarten Taschen 6 angeordnet sind, ist die beschriebene Trapezform der Fenster 11 erfindungsgemäß vorgesehen.

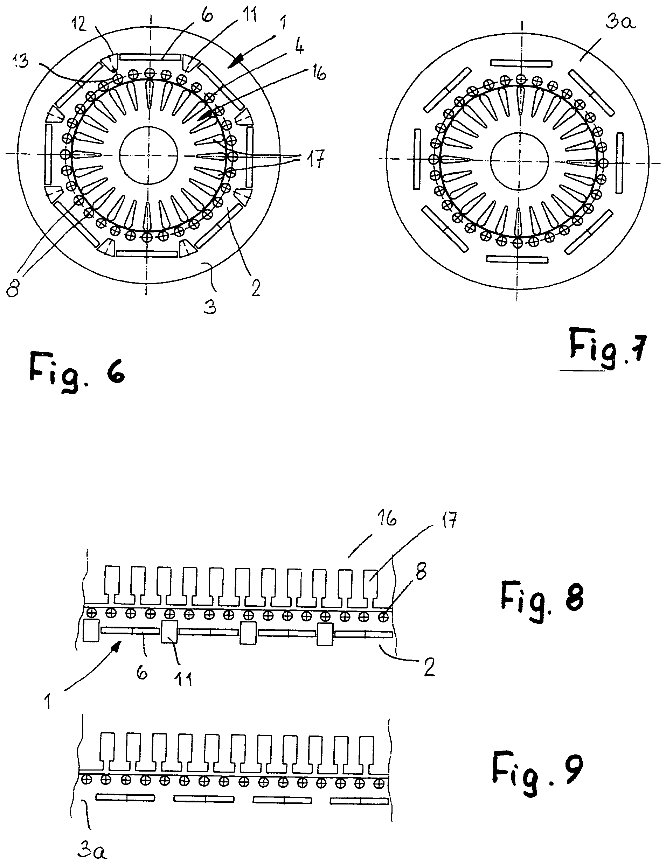

Die Fig. 6 und 7 zeigen einen Lamellenstapel, der für einen Außenläufermotor vorgesehen ist. In diesem Falle umgibt der Rotor 1 den Stator 16. Er hat die Nuten 17 zur Aufnahme der Wicklung(en). Der Rotor 1 umgibt den Stator 16 unter Bildung eines Luftspaltes.

Der Rotor 1 und der Stator 16 bestehen wiederum jeweils aus einem Lamellenstapel. Der Lamellenstapel 2 des Rotors 1 ist ringförmig ausgebildet und weist über den Umfang gleichmäßig verteilt angeordnete Taschen 6 auf, zwischen denen sich jeweils ein Fenster 11 befindet. Im Ausführungsbeispiel sind im Lamellenstapel 2 acht Taschen 6 zur Aufnahme der Magnete vorgesehen. Die Taschen 6 sind gleich ausgebildet und haben jeweils rechteckigen Umriss. Die Fenster 11 haben Trapezform, wobei die radial innere Längsseite 13 kürzer ist als die radial außen liegende Längsseite 12. Die Längsseite 13 hat geringen Abstand vom Anlaufkäfig 4, der die über den Umfang des Lamellenstapels 2 gleichmäßig verteilt angeordneten, axial verlaufenden Dämpferstäben 8 aufweist. Der Anlaufkäfig 4 befindet sich an der inneren Mantelfläche des Lamellenstapels 2.

Damit beim Druckgießvorgang das Druckgießmaterial nicht in die Fenster 11 und von dort in die Taschen 6 gelangt, sind die durch die Fenster 11 gebildeten Hohlräume des Lamellenstapels 2 beim Druckgießvorgang endseitig durch jeweils wenigstens eine Blechlamelle 3a geschlossen (Fig. 7). Diese endseitigen Blechlamellen 3a sind grundsätzlich gleich ausgebildet wie die Lamellen 3, die den Lamellenstapel 2 bilden. Die endseitigen Blechlamellen 3a haben jedoch keine Fenster 11. Werden die endseitigen Blechlamellen 3a an beiden Enden des Lamellenstapels 2 angebracht, werden die Hohlräume 11 des Lamellenstapels 2 geschlossen. Dann kann der Anlaufkäfig 4 problemlos im Druckgießverfahren hergestellt werden. Wie beim vorigen Ausführungsbeispiel verhindern die endseitigen Blechlamellen 3a in der beschriebenen Weise den Zutritt des Druckgießmaterials in die Taschen 6.

Die Fig. 8 und 9 zeigen ein nicht zur Erfindung gehörendes Vergleichsbeispiel, bei dem ein Lamellenstapel bei einem Linearmotor eingesetzt wird. Der Lamellenstapel 2 des Läufers 1 hat die Taschen 6 zur Aufnahme der Magnete. Die Taschen 6 liegen in einer Linie mit Abstand hintereinander. Zwischen den Taschen 6 befinden sich die Fenster 11, die innerhalb des Lamellenstapels 2 die Hohlräume bilden. Sie haben rechteckigen Umriss und sind jeweils gleich groß. Die Fenster 11 ragen über beide Seiten der Taschen 6 vor und reichen bis nahe an die Dämpferstäbe 8, die längs des geraden Randes des Läufers 11 angeordnet sind. Der Läufer 1 bewegt sich längs des Stators 16, der ebenfalls aus einem Lamellenstapel gebildet wird und die Nuten 17 zur Aufnahme der Wicklung(en) aufweist. Damit beim Druckgießvorgang das Druckgießmaterial nicht in die Hohlräume 11 gelangt, wird auf beide Enden des Lamellenstapels 2 jeweils mindestens eine Blechlamelle 3a aufgelegt, bei der die Fenster 11 fehlen. Dadurch werden die Hohlräume 11 des Lamellenstapels 2 durch die endseitigen Blechlamellen 3a während des Druckgießvorganges geschlossen.

Der Lamellenstapel kann auch für Generatoren eingesetzt werden.

Als Druckgießmaterial kommen vorteilhaft Aluminium, Aluminiumlegierungen, Kupfer, Kupferlegierungen und Materialien mit einem Leitwert von ≥ 58 MS/m in Betracht.

## Patentansprüche

1. Aus Blechlamellen (3) gebildeter Lamellenstapel (2) für Rotoren und/oder Statoren von Elektromotoren und Generatoren, mit zur Aufnahme von Magneten (5) dienenden Taschen (6), die winklig zueinander verlaufen und rechteckigen Umriss haben, mit einem Anlaufkäfig (4), der im Druckgießverfahren hergestellt ist, am Umfang des Lamellenstapels (2) angeordnet ist und den Lamellenstapel (2) innen oder außen umschließt, und mit zwischen benachbarten Taschen (6) axial verlaufenden Hohlräumen (11), die kleineren radialen Abstand vom Anlaufkäfig (4) haben als die Taschen (6),
**dadurch gekennzeichnet, dass** die Hohlräume (11) an beiden Enden durch jeweils wenigstens eine endseitige Blechlamelle (3a) des Lamellenstapels (2) geschlossen sind und einen trapezförmigen Umriss haben.

2. Lamellenstapel (2) nach Anspruch 1,
**dadurch gekennzeichnet, dass** die Blechlamelle (3a) aus magnetischem oder nicht magnetischem Material besteht.

3. Lamellenstapel nach Anspruch 1 oder 2,
**dadurch gekennzeichnet, dass** das Druckgießmaterial des Druckgießverfahrens Aluminium, Aluminiumlegierungen, Kupfer, Kupferlegierungen oder Materialien mit einem Leitwert ≥ 58 MS/m ist.

4. Rotor mit einem Lamellenstapel nach einem der Ansprüche 1 bis 3.

## Claims

1. Stacked lamination (2) comprised of sheet metal lamellae (3) for rotors and/or stators of electric motors and generators, with pockets (6) for that serve to receive magnets (5), that pockets (6) are angled to each other and having a rectangular outline, with a startup cage (4) that is manufactured in a diecasting process, arranged on the periphery of the stacked lamination (2), and inwardly or outwardly envelops the stacked lamination (2), and with cavities (11) that run axially between adjacent pockets (6) and have a smaller radial distance from the startup cage (4) than the pockets (6),
**characterized in that** the cavities (11) at both ends are each closed by at least one end-side sheet metal lamella (3a) of the stacked lamination (2) and have a trapezoidal outline.

2. Stacked lamination (2) according to claim 1,
**characterized in that** the sheet metal lamella (3a) consists of magnetic or nonmagnetic material.

3. Stacked lamination according to claim 1 or 2,
**characterized in that** the diecasting material of the diecasting process is comprised of aluminum, aluminum alloys, copper, copper alloys or materials with a conductance ≥ 58 MS/m.

4. Stacked lamination according to one of claims 1 to 3.

## Revendications

1. Empilement de tôles (2) constitué de lamelles de tôle (3) pour des rotors et/ou des stators de moteurs électriques et de générateurs, avec des poches (6) destinées à accueillir des aimants (5), lesquelles s'étendent sous un angle les unes par rapport aux autres et présentent un contour rectangulaire, avec une cage de démarrage (4) fabriquée à l'aide d'un procédé de coulée sous pression, disposée sur le pourtour de l'empilement de tôles (2) et entourant l'empilement de tôles (2) intérieurement ou extérieurement, et avec des espaces creux (11) s'étendant axialement entre des poches (6) voisines, dont la distance radiale par rapport à la cage de démarrage (4) est plus petite que celle des poches (6),
**caractérisé en ce que** les espaces creux (11) sont fermés aux deux ex trémités, respectivement par au moins une lamelle de tôle (3a) côté extrémité de l'empilement de tôles (2), et présentent un contour trapézoïdal.

2. Empilement de tôles (2) selon la revendication 1,
**caractérisé en ce que** les lamelles de tôle (3a) sont constituées d'un matériau magnétique ou non magnétique.

3. Empilement de tôles selon la revendication 1 ou 2,
**caractérisé en ce que** le matériau de coulée sous pression du procédé de coulée sous pression est de l'aluminium, un alliage d'aluminium, du cuivre, un alliage de cuivre ou des matériaux présentant une conductance ≥ 58 MS/m.

4. Rotor avec un empilement de tôles selon l'une des revendications 1 à 3.
